# FASCICULE DE BREVET EUROPEEN

(11) **EP 3 292 323 B1**
(45) Date de publication et mention de la délivrance du brevet: **18.03.2020**
(21) Numéro de dépôt: 16721193.7
(22) Date de dépôt: 12.04.2016
(51) Int. Cl.: F16H 61/12, B60W 50/029, B60W 10/06, B60W 10/11, B60K 6/52, B60K 6/547, B60W 10/08, B60W 20/50, B60W 50/14

(54) **PROCÉDÉ ET DISPOSITIF DE CONTRÔLE DU COUPLE D'UN GMP DE VÉHICULE EN CAS D'INDISPONIBILITÉ D'INFORMATIONS DU CALCULATEUR DÉDIÉ À LA BOÎTE DE VITESSES**
VERFAHREN UND VORRICHTUNG ZUR STEUERUNG DES DREHMOMENTS EINES FAHRZEUGGETRIEBES BEI UNVERFÜGBARKEIT VON INFORMATIONEN AUS DEM GETRIEBECOMPUTER
METHOD AND DEVICE FOR CONTROLLING THE TORQUE OF A VEHICLE POWERTRAIN IN THE EVENT OF UNAVAILABILITY OF INFORMATION FROM THE GEARBOX COMPUTER

(30) Priorité: 06.05.2015 FR 1554064
(43) Date de publication de la demande: 14.03.2018
(73) Titulaire: PSA AUTOMOBILES S.A., 78300 Poissy (FR)
(72) Inventeur: SERDJANIAN, Gregor, 75020 Paris (FR); METRARD, Francois, 78120 Rambouillet (FR); BARDET, Arnaud, 78150 Le Chesnay (FR); MILHAU, Yohan, 78400 Chatou (FR)
(86) Numéro de dépôt international: PCT/FR2016/050837
(87) Numéro de publication internationale: WO 2016/177946

(56) Documents cités:
- US-A- 5 033 328
- US-A1- 2012 302 399

## Description

L'invention concerne les véhicules comportant un groupe motopropulseur (ou GMP) couplé à une boîte de vitesses, et plus précisément le contrôle du couple qui est produit par le GMP (voir par exemple US5033328A ou US2012/302399A).

On entend dans ce qui suit par « boîte de vitesses » un équipement transformant de façon variable le couple produit par le GMP en couple pour des moyens de déplacement (comme par exemple des roues) d'un véhicule en fonction du rapport (ou vitesse) engagé qui lui est imposé par un calculateur dédié à la demande d'un autre calculateur supervisant le fonctionnement du GMP. Par conséquent, il pourra s'agir, par exemple, d'une boîte de vitesses automatique (ou BVA) ou d'une boîte de vitesses manuelle pilotée (BVMP ou DCT (boîte à double embrayage)), dès lors qu'elle reçoit ses commandes d'un calculateur dédié qui ne décide pas directement du rapport qu'elle doit engager mais reçoit des consignes de rapport à engager de la part du calculateur supervisant le fonctionnement du GMP.

Comme le sait l'homme de l'art, dans les véhicules du type précité, le calculateur, qui supervise le fonctionnement du GMP, détermine une consigne de couple, définissant le couple que doit produire le GMP, notamment en fonction de première et seconde informations qui sont fournies par le calculateur dédié à la boîte de vitesses. La première information est représentative du rapport qui est effectivement engagé dans la boîte de vitesses et la seconde information est représentative d'un rapport cible qui est défini par la toute dernière consigne de rapport à engager fournie par le calculateur supervisant le fonctionnement du GMP.

En cas de défaillance des communications entre le calculateur dédié à la boîte de vitesses et le calculateur supervisant le fonctionnement du GMP, soit parce que le calculateur dédié à la boîte de vitesses n'envoie pas les première et seconde informations, soit parce que le calculateur supervisant le fonctionnement du GMP n'arrive plus à recevoir ou à lire les première et seconde informations, le calculateur supervisant le fonctionnement du GMP ne peut plus déterminer la consigne de couple. Il peut en résulter une perte du couple produit par le GMP, ce qui peut s'avérer dangereux pour les passagers du véhicule (notamment dans une phase de dépassement ou de dégagement d'une situation dangereuse).

L'invention a donc notamment pour but d'améliorer la situation.

Elle propose notamment à cet effet un procédé, destiné à contrôler le couple qui est produit par un groupe motopropulseur de véhicule et qui est fonction d'une consigne de couple déterminée par un premier calculateur supervisant le fonctionnement du groupe motopropulseur, ce dernier étant couplé à une boîte de vitesses dont les rapports sont pilotés, en fonction d'une consigne de rapport à engager fournie par le premier calculateur, par un second calculateur qui fournit à ce dernier une première information représentative du rapport effectivement engagé et une seconde information représentative d'un rapport cible utiles à la détermination de la consigne de couple.

Ce procédé se caractérise par le fait qu'il comprend une étape dans laquelle, en l'absence des première et seconde informations, le premier calculateur détermine la consigne de couple en fonction de deux consignes de rapport à engager précédemment fournies à des premier et second instants antérieurs choisis en remplacement respectivement des première et seconde informations.

Grâce à ce remplacement des première et seconde informations par deux consignes de rapport à engager précédemment fournies au second calculateur (dédié à la boîte de vitesses) par le premier calculateur (supervisant le fonctionnement du GMP), ce premier calculateur peut continuer d'élaborer des consignes de couple et ainsi permettre au GMP de conserver sensiblement ses performances nominales.

Le procédé selon l'invention peut comporter d'autres caractéristiques qui peuvent être prises séparément ou en combinaison, et notamment :
- le premier instant antérieur choisi peut être fonction d'une durée nécessaire au second calculateur pour prendre en compte une nouvelle valeur de consigne de rapport à engager fournie par le premier calculateur et remplacer une valeur de rapport cible en cours par cette nouvelle valeur de consigne de rapport à engager. Par ailleurs, le second instant antérieur choisi peut être fonction d'une durée nécessaire au second calculateur pour piloter des actionneurs de la boîte de vitesses pour passer mécaniquement le rapport défini par la nouvelle consigne de rapport à engager, puis donner une nouvelle valeur à la seconde information ;
- le premier instant antérieur choisi peut, par exemple, être compris entre environ -150 ms par rapport à un instant t courant et environ -30 ms par rapport à un instant t courant ;
- le second instant antérieur choisi peut, par exemple, être compris entre environ -1200 ms par rapport à un instant t courant et environ -400 ms par rapport à un instant t courant ;
- dans l'étape on peut informer un conducteur du véhicule d'un défaut ;
   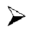 on peut informer le conducteur au moyen d'un message textuel ou d'une imagette affiché(e) sur un écran du véhicule et/ou d'un message sonore diffusé par au moins un haut-parleur du véhicule.

L'invention propose également un dispositif de contrôle destiné à équiper un premier calculateur supervisant le fonctionnement d'un groupe motopropulseur de véhicule propre à produire un couple en fonction d'une consigne de couple déterminée, et couplé à une boîte de vitesses dont les rapports sont pilotés, en fonction d'une consigne de rapport à engager fournie par le premier calculateur, par un second calculateur fournissant à ce dernier une première information représentative du rapport effectivement engagé et une seconde information représentative d'un rapport cible utiles à la détermination de ladite consigne de couple.

Ce dispositif se caractérise par le fait qu'il est agencé, en l'absence des première et seconde informations, pour déterminer la consigne de couple en fonction de deux consignes de rapport à engager précédemment fournies à des premier et second instants antérieurs choisis en remplacement respectivement des première et seconde informations.

L'invention propose également un calculateur, d'une part, destiné à superviser le fonctionnement d'un groupe motopropulseur de véhicule propre à produire un couple en fonction d'une consigne de couple déterminée et couplé à une boîte de vitesses dont les rapports sont pilotés, en fonction d'une consigne de rapport à engager, par un second calculateur fournissant une première information représentative du rapport effectivement engagé et une seconde information représentative d'un rapport cible utiles à la détermination de la consigne de couple, et, d'autre part, comprenant un dispositif de contrôle du type de celui présenté ci-avant.

L'invention propose également un véhicule, éventuellement de type automobile, et comprenant, d'une part, un groupe motopropulseur propre à produire un couple en fonction d'une consigne de couple déterminée et couplé à une boîte de vitesses dont les rapports sont pilotés, en fonction d'une consigne de rapport à engager, par un calculateur fournissant une première information représentative du rapport effectivement engagé et une seconde information représentative d'un rapport cible utiles à la détermination de la consigne de couple, et, d'autre part, un autre calculateur du type de celui présenté ci-avant et propre à déterminer la consigne de couple.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule à groupe motopropulseur hybride, et comportant un calculateur muni d'un exemple de réalisation d'un dispositif de contrôle selon l'invention, et
- la figure 2 illustre schématiquement un exemple d'algorithme mettant en œuvre un procédé de contrôle selon l'invention.

L'invention a pour but de proposer un procédé de contrôle, et un dispositif de contrôle DC associé, destinés à contrôler le couple qui est produit par un groupe motopropulseur (ou GMP) d'un véhicule V.

On considère dans ce qui suit, à titre d'exemple non limitatif, que le véhicule V est de type automobile. Il s'agit par exemple d'une voiture. Mais l'invention n'est pas limitée à ce type de véhicule. Elle concerne en effet tout véhicule ayant un groupe motopropulseur destiné à produire du couple, par exemple pour faire tourner des roues ou une hélice. Par conséquent, l'invention concerne notamment les véhicules terrestres (voitures, motocyclettes, véhicules utilitaires, cars (ou bus), camions, engins de voirie, engins de chantier, engins de manutention, trains), les véhicules fluviaux ou maritimes, et les aéronefs.

Par ailleurs, on considère dans ce qui suit, à titre d'exemple non limitatif, que le groupe motopropulseur (ou GMP) est de type hybride, et donc comprend au moins un moteur thermique MT, couplé à une boîte de vitesses BV, et au moins une machine motrice MM non thermique. On entend ici par « moteur thermique » un moteur consommant du carburant ou des produits chimiques. Par conséquent, dans le domaine aéronautique il pourra notamment s'agir d'un réacteur, d'un turboréacteur ou d'un moteur chimique. Par ailleurs, on entend ici par « machine motrice » une machine ou un moteur non thermique destiné(e) à fournir du couple pour déplacer un véhicule, soit seul(e), soit en complément d'un moteur thermique. Par conséquent, il pourra par exemple s'agir d'un moteur électrique, d'une machine hydraulique, d'une machine pneumatique ou d'un volant d'inertie. On notera que cette machine motrice MM n'est pas couplée au moteur thermique MT.

Mais l'invention n'est pas limitée aux GMPs hybrides. Elle concerne également les GMPs traditionnels, c'est-à-dire comprenant au moins un moteur thermique MT couplé à une boîte de vitesses BV, sous réserve que l'élaboration des consignes de rapport de boîte se fasse dans un calculateur externe au calculateur qui est dédié à la boîte de vitesses.

On considère dans ce qui suit, à titre d'exemple non limitatif, que la machine motrice MM est de type électrique. Mais comme indiqué ci-avant cette machine motrice pourrait être d'un autre type.

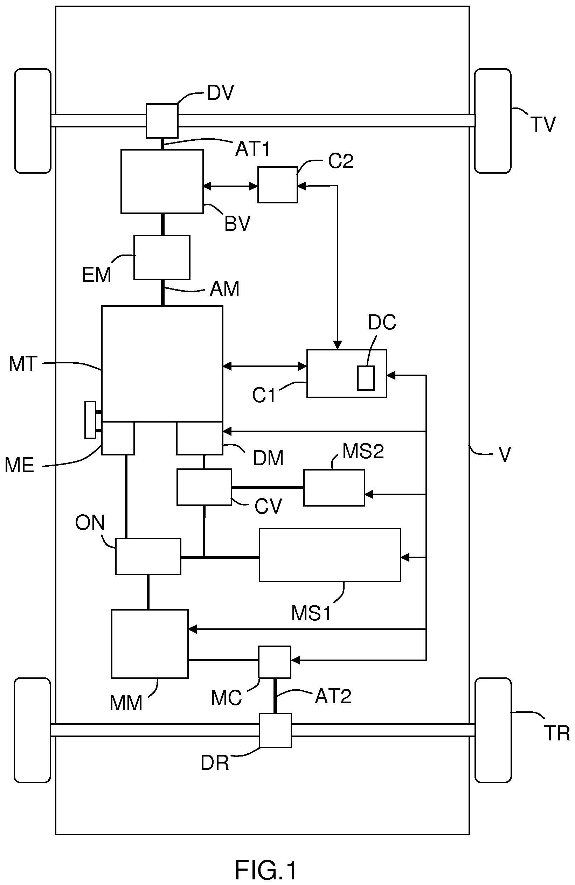

On a schématiquement représenté sur la figure 1 un véhicule V comprenant une chaîne de transmission comportant, à titre d'exemple, un groupe motopropulseur (ou GMP), ici de type hybride, un premier calculateur C1 propre à superviser (ou gérer) le fonctionnement du GMP, un embrayage EM, une boîte de vitesses BV, un second calculateur C2 dédié à la boîte de vitesses BV, un moyen de couplage/découplage MC pour la machine motrice MM du GMP, et un dispositif de contrôle DC selon l'invention.

Le GMP (ici de type hybride) comprend notamment un moteur thermique MT, un arbre moteur AM, une machine électrique ME, au moins une machine motrice MM (ici un moteur électrique), des premiers moyens de stockage d'énergie (ici électrique) MS1, des seconds moyens de stockage d'énergie électrique MS2 auquel est couplé un réseau d'alimentation électrique (non représenté).

La machine motrice MM est couplée aux premiers moyens de stockage d'énergie MS1 qui sont, par exemple, de type basse tension (par exemple d'environ 220 V). Comme illustré, ce couplage peut se faire via un onduleur ON de type DC/DC.

La chaîne de transmission comprend également un démarreur DM et, ici, des premier AT1 et second AT2 arbres de transmission, à titre d'exemple non limitatif.

Par exemple, le premier arbre de transmission AT1 est chargé d'entraîner en rotation les roues du train avant TV du véhicule V (de préférence via un différentiel avant DV), tandis que le second arbre de transmission AT2 est chargé d'entraîner en rotation les roues du train arrière TR du véhicule V (de préférence via un différentiel arrière DR). Mais l'inverse est également possible.

Le moteur thermique MT comprend un vilebrequin (non représenté) qui est solidarisé fixement à un arbre moteur AM afin d'entraîner ce dernier (AM) en rotation.

La boîte de vitesses BV comprend au moins un arbre d'entrée (ou primaire) destiné à recevoir le couple produit par le moteur thermique MT via l'embrayage EM, et un arbre de sortie destiné à recevoir ce couple via l'arbre d'entrée afin de le communiquer au premier arbre de transmission AT1 auquel il est couplé et qui est couplé indirectement aux roues (ici) avant du véhicule V via le différentiel avant DV. Par exemple, l'embrayage EM comprend un volant moteur solidarisé fixement à l'arbre moteur AM et un disque d'embrayage solidarisé fixement à l'arbre d'entrée de la boîte de vitesses BV.

On notera que la boîte de vitesses BV peut être une boîte de vitesses automatique (ou BVA) ou une boîte de vitesses manuelle pilotée (BVMP ou DCT (boîte à double embrayage)), dès lors qu'elle reçoit ses commandes du second calculateur C2 qui lui est dédié et qui ne décide pas directement du rapport qu'elle doit engager mais reçoit des consignes de rapport à engager cᵣₑ de la part du premier calculateur C1 qui supervise le fonctionnement du GMP.

La machine électrique ME est couplée au moteur thermique MT, par exemple via une courroie de façade. Il s'agit, par exemple, d'un alterno-démarreur chargé de lancer le moteur thermique MT afin de lui permettre de démarrer, y compris en présence d'un système de contrôle d'arrêt et de redémarrage automatique (ou « stop and start »), et de produire un couple destiné à être transmis au premier arbre de transmission AT1 via l'embrayage EM et la boîte de vitesses BV. Cette production de couple se fait grâce à l'énergie qui est stockée dans les premiers moyens de stockage MS1, ainsi que grâce à l'énergie qui est fournie directement par la machine motrice MM, si celle-ci est pilotée en mode générateur, et sans solliciter l'énergie présente dans les premiers moyens de stockage MS1 (on parle alors de dérivation de puissance).

Le moyen de couplage/découplage MC est ici chargé de coupler/ découpler la machine motrice MM au/du second arbre de transmission AT2, sur ordre du premier calculateur C1, afin de communiquer le couple qu'il produit, grâce à l'énergie stockée dans les premiers moyens de stockage MS1, au second arbre de transmission AT2 qui est couplé indirectement aux roues (ici) arrière du véhicule V via le différentiel arrière DR. Ce moyen de couplage/découplage MC est par exemple un mécanisme à crabots ou bien un embrayage ou encore un convertisseur de couple hydraulique.

Le démarreur DM est chargé de lancer le moteur thermique MT lorsque le conducteur effectue une demande d'activation au moyen d'une clé ou d'un bouton (ou « push ») de démarrage. Ce démarreur DM est couplé aux seconds moyens de stockage MS2, de préférence via un convertisseur CV de type DC/DC. Ce dernier (CV) peut être également couplé, comme illustré non limitativement, à l'onduleur ON et aux premiers moyens de stockage d'énergie électrique MS1. Par exemple, les seconds moyens de stockage MS2 sont agencés sous la forme d'une batterie de type très basse tension (par exemple 12 V, 24 V ou 48V).

Le réseau d'alimentation électrique (ou réseau de bord) est chargé d'alimenter en énergie électrique des équipements électriques et électroniques du véhicule V. Il est connecté aux seconds moyens de stockage MS2.

Les fonctionnements du moteur thermique MT, de la machine motrice MM, des moyens de couplage/découplage MC, de la machine électrique ME et du démarreur DM peuvent être contrôlés par le premier calculateur C1. Ce dernier (C1) est notamment chargé de déterminer fréquemment une consigne de couple cc, qui définit le couple que doit produire le GMP, et une consigne de rapport à engager cᵣₑ, qui définit le prochain rapport que la boîte de vitesses BV va devoir engager et qui est fonction de la consigne de couple cc et destinée au second calculateur C2.

Chaque consigne de couple cc est déterminée par le premier calculateur C1 en fonction de première i1 et seconde i2 informations qui sont fournies par le second calculateur C2 (dédié à la boîte de vitesses BV). Chaque première information i1 est représentative du rapport qui est effectivement engagé dans la boîte de vitesses BV à l'instant t considéré. Chaque seconde information i2 est représentative d'un rapport cible qui est défini par la toute dernière consigne de rapport à engager cᵣₑ qui a été fournie par le premier calculateur C1. Elle (i2) représente donc le prochain rapport qui sera engagé dans la boîte de vitesses BV.

Le second calculateur C2 est chargé de produire des commandes destinées à engager dans la boîte de vitesses BV le rapport qui est défini par la dernière consigne de rapport à engager cᵣₑ fournie par le premier calculateur C1. Il est également chargé de fournir fréquemment au premier calculateur C1 des première i1 et seconde i2 informations.

Comme indiqué plus haut, l'invention propose notamment de mettre en œuvre, au sein du véhicule V, un procédé destiné à contrôler le couple qui est produit par le GMP de ce véhicule V, lorsque le premier calculateur C1 ne dispose pas des première i1 et seconde i2 informations.

Cette mise en œuvre peut se faire au moyen d'un dispositif de contrôle DC qui peut, comme illustré non limitativement sur la figure 1, être installé dans le premier calculateur C1. Mais cela n'est pas obligatoire. En effet, il pourrait être externe au premier calculateur C1, tout en étant couplé à ce dernier (C1). Dans ce dernier cas, il peut être lui-même agencé sous la forme d'un calculateur dédié comprenant un éventuel programme dédié, par exemple. Par conséquent, un dispositif de contrôle DC, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

Le procédé (de contrôle), selon l'invention, comprend une étape qui est déclenchée chaque fois que le premier calculateur C1 ne dispose pas des première i1 et seconde i2 informations qui doivent normalement lui être fournies par le second calculateur C2. Cette situation résulte d'une défaillance des communications entre les premier C1 et second C2 calculateurs, laquelle provient soit du fait que le second calculateur C2 n'envoie pas les première i1 et seconde i2 informations, soit du fait que le premier calculateur C1 n'arrive plus à recevoir ou à lire les première i1 et seconde i2 informations.

Durant l'étape du procédé, en l'absence des première i1 et seconde i2 informations le premier calculateur C1 (et plus précisément son dispositif (de contrôle) DC) détermine à un instant t la consigne de couple cc en fonction de deux consignes de rapport à engager cᵣₑ(t-Δt1) et cᵣₑ(t-Δt2), précédemment fournies respectivement à des premier t-Δt1 et second t-Δt2 instants antérieurs choisis, en remplacement respectivement des première i1 et seconde i2 informations. En d'autres termes, le dispositif (de contrôle) DC va utiliser la consigne de rapport à engager cᵣₑ(t-Δt1) qu'il avait fournie Δt1 millisecondes plus tôt au second calculateur C2 à la place de la première information i1 dont il ne dispose pas, et la consigne de rapport à engager cᵣₑ(t-Δt2) qu'il avait fournie Δt2 millisecondes plus tôt au second calculateur C2 à la place de la seconde information i2 dont il ne dispose pas, pour déterminer la nouvelle consigne de couple cc.

Grâce à ce remplacement (ou cette reconfiguration) le premier calculateur C1 (et plus précisément son dispositif DC) simule en quelque sorte un fonctionnement du GMP en situation nominale, ce qui revient à effectuer un pilotage des rapports en « boucle ouverte ». Il peut donc continuer d'élaborer des consignes de couple répondant à la volonté du conducteur et ainsi permettre au GMP de conserver sensiblement ses performances nominales. Ainsi, le conducteur dispose de toutes les performances du véhicule V malgré la défaillance.

Pour que l'invention puisse être mise en œuvre, il faut que le dispositif DC stocke dans des moyens de stockage un historique de consignes de rapport à engager cᵣₑ qu'il a fournies au second calculateur C2, en correspondance des instants où il les a respectivement fournies. Par exemple, les moyens de stockage peuvent stocker les dix ou vingt dernières consignes de rapport à engager cᵣₑ fournies (on notera que ces valeurs sont calibrables et ne sont donc que des exemples). Ces moyens de stockage peuvent faire partie du dispositif DC ou bien du premier calculateur C1. Par ailleurs, ces moyens de stockage peuvent, par exemple, être réalisés sous la forme d'une mémoire, éventuellement de type logiciel.

Le choix des premier t-Δt1 et second t-Δt2 instants antérieurs peut avantageusement résulter du fait qu'en fonctionnement nominal, lorsque la consigne de rapport à engager cᵣₑ évolue, sa prise en compte par le second calculateur C2 se traduit tout d'abord par le passage du rapport cible à la nouvelle valeur de la consigne de rapport à engager. Cette première étape dure environ Δt1 millisecondes et peut varier d'un modèle de véhicule à un autre modèle. Puis, dans une seconde étape le second calculateur C2 pilote les différents actionneurs de la boîte de vitesses BV pour passer mécaniquement le rapport défini par la nouvelle consigne de rapport à engager cᵣₑ, puis donne à la seconde information i2 sa nouvelle valeur. Cette seconde étape dure environ Δt2 millisecondes et peut varier d'un modèle de véhicule à un autre modèle.

Par conséquent le premier instant antérieur choisi t-Δt1 peut être fonction de la durée nécessaire au second calculateur C2 pour prendre en compte une nouvelle valeur de consigne de rapport à engager cᵣₑ fournie par le premier calculateur C1 et remplacer une valeur de rapport cible en cours par cette nouvelle valeur de consigne de rapport à engager cᵣₑ. De même, le second instant antérieur choisi t-Δt2 peut être fonction de la durée nécessaire au second calculateur C2 pour piloter des actionneurs de la boîte de vitesses BV pour passer mécaniquement le rapport défini par la nouvelle consigne de rapport à engager cᵣₑ, puis donner une nouvelle valeur à la seconde information i2.

Par exemple, le premier instant antérieur choisi Δt1 peut être compris entre environ -150 ms par rapport à l'instant t courant et environ -30 ms par rapport à l'instant t courant (on notera que ces valeurs sont calibrables et ne sont donc que des exemples). Dans ce cas, on peut, par exemple, le choisir égal à -50 ms par rapport à l'instant t courant.

Egalement par exemple, le second instant antérieur choisi t-Δt2 peut être compris entre environ -1200 ms par rapport à un instant t courant et environ -400 ms par rapport à un instant t courant (on notera que ces valeurs sont calibrables et ne sont donc que des exemples). Dans ce cas, on peut, par exemple, le choisir égal à -500 ms par rapport à l'instant t courant.

On notera que dans l'étape du procédé le premier calculateur C1 (et plus précisément son dispositif DC) peut avantageusement informer le conducteur du véhicule V d'un défaut survenu dans ce dernier (V), afin qu'il se rende dans un service après-vente pour faire vérifier son véhicule V.

Par exemple, le premier calculateur C1 (et plus précisément son dispositif DC) peuvent informer le conducteur au moyen d'un message textuel ou d'une imagette affiché(e) sur un écran du véhicule V et/ou d'un message sonore diffusé par au moins un haut-parleur du véhicule V.

L'écran peut être, par exemple, celui du combiné du tableau de bord du véhicule V, ou celui du combiné central qui est installé dans ou sur la planche de bord du véhicule V, ou bien il peut s'agir d'une partie du pare-brise du véhicule V qui est utilisée par un dispositif d'affichage tête haute.

Le message textuel ou le message sonore peut, par exemple, être « problème possible de gestion du couple, veuillez faire réviser votre véhicule » ou« problème détecté, veuillez faire réviser votre véhicule ».

L'imagette peut, par exemple, être celle qui est destinée au voyant « service ».

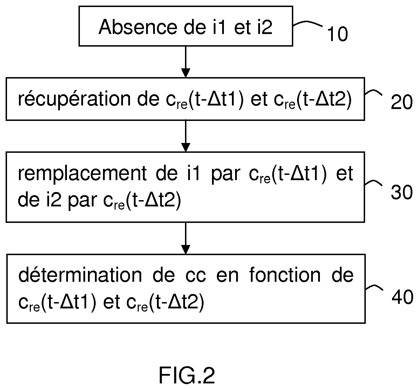

On a schématiquement illustré sur la figure 2 un exemple non limitatif d'algorithme mettant en œuvre un procédé de sécurisation selon l'invention.

Dans une sous-étape 10, le premier calculateur C1 (et plus précisément son dispositif DC) détecte qu'il ne dispose pas des première i1 et seconde i2 informations.

Dans une sous-étape 20, le premier calculateur C1 (et plus précisément son dispositif DC) récupère à l'instant t dans les moyens de stockage précités les deux consignes de rapport à engager cᵣₑ(t-Δt1) et cᵣₑ(t-Δt2) qu'il a précédemment fournies aux premier t-Δt1 et second t-Δt2 instants antérieurs.

Dans une sous-étape 30, le premier calculateur C1 (et plus précisément son dispositif DC) remplace la première information i1 par la consigne de rapport à engager cᵣₑ(t-Δt1) récupérée et la seconde information i2 par la consigne de rapport à engager cᵣₑ(t-Δt2) récupérée.

Enfin, dans une sous-étape 40, le premier calculateur C1 (et plus précisément son dispositif DC) détermine une nouvelle consigne de couple cc en fonction de ces deux consignes de rapport à engager cᵣₑ(t-Δt1) et cᵣₑ(t-Δt2).

L'invention permet de garantir la sécurité des passagers du véhicule du fait que ce dernier demeure utilisable, éventuellement de façon légèrement dégradée, alors même qu'il existe une défaillance de communication.

## Revendications

1. Procédé de contrôle du couple produit par un groupe motopropulseur de véhicule (V), ledit couple étant fonction d'une consigne de couple déterminée par un premier calculateur (C1) supervisant le fonctionnement dudit groupe motopropulseur, et ledit groupe motopropulseur étant couplé à une boîte de vitesses (BV) dont les rapports sont pilotés, en fonction d'une consigne de rapport à engager fournie par ledit premier calculateur (C1), par un second calculateur (C2) fournissant à ce dernier (C1) une première information représentative du rapport effectivement engagé et une seconde information représentative d'un rapport cible utiles à la détermination de ladite consigne de couple, **caractérisé en ce qu'**il comprend une étape dans laquelle, en l'absence desdites première et seconde informations, ledit premier calculateur (C1) détermine ladite consigne de couple en fonction de deux consignes de rapport à engager précédemment fournies à des premier et second instants antérieurs choisis en remplacement respectivement desdites première et seconde informations.

2. Procédé selon la revendication 1, **caractérisé en ce que** ledit premier instant antérieur choisi est fonction d'une durée nécessaire audit second calculateur C2 pour prendre en compte une nouvelle valeur de consigne de rapport à engager fournie par ledit premier calculateur (C1) et remplacer une valeur de rapport cible en cours par cette nouvelle valeur de consigne de rapport à engager, et **en ce que** ledit second instant antérieur choisi est fonction d'une durée nécessaire audit second calculateur C2 pour piloter des actionneurs de ladite boîte de vitesses (BV) pour passer mécaniquement le rapport défini par ladite nouvelle consigne de rapport à engager, puis donner une nouvelle valeur à ladite seconde information.

3. Procédé selon l'une des revendications 1 et 2, **caractérisé en ce que** ledit premier instant antérieur choisi est compris entre environ -150 ms par rapport à un instant t courant et environ -30 ms par rapport à un instant t courant.

4. Procédé selon l'une des revendications 1 à 3, **caractérisé en ce que** ledit second instant antérieur choisi est compris entre environ -1200 ms par rapport à un instant t courant et environ -400 ms par rapport à un instant t courant.

5. Procédé selon l'une des revendications 1 à 4, **caractérisé en ce que** dans ladite étape on informe un conducteur dudit véhicule (V) d'un défaut.

6. Procédé selon la revendication 5, **caractérisé en ce que** l'on informe ledit conducteur au moyen d'un message textuel ou d'une imagette affiché(e) sur un écran dudit véhicule (V) et/ou d'un message sonore diffusé par au moins un haut-parleur dudit véhicule (V).

7. Dispositif de contrôle (DC) pour un premier calculateur (C1) supervisant le fonctionnement d'un groupe motopropulseur de véhicule (V) propre à produire un couple en fonction d'une consigne de couple déterminée, et couplé à une boîte de vitesses (BV) dont les rapports sont pilotés, en fonction d'une consigne de rapport à engager fournie par ledit premier calculateur (C1), par un second calculateur (C2) fournissant à ce dernier (C1) une première information représentative du rapport effectivement engagé et une seconde information représentative d'un rapport cible utiles à la détermination de ladite consigne de couple, **caractérisé en ce qu'**il est agencé, en l'absence desdites première et seconde informations, pour déterminer ladite consigne de couple en fonction de deux consignes de rapport à engager précédemment fournies à des premier et second instants antérieurs choisis en remplacement respectivement desdites première et seconde informations.

8. Calculateur (C1) pour superviser le fonctionnement d'un groupe motopropulseur de véhicule (V) propre à produire un couple en fonction d'une consigne de couple déterminée et couplé à une boîte de vitesses (BV) dont les rapports sont pilotés, en fonction d'une consigne de rapport à engager, par un second calculateur (C2) fournissant une première information représentative du rapport effectivement engagé et une seconde information représentative d'un rapport cible utiles à la détermination de ladite consigne de couple, **caractérisé en ce qu'**il comprend un dispositif de contrôle (DC) selon la revendication 7.

9. Véhicule (V) comprenant un groupe motopropulseur propre à produire un couple en fonction d'une consigne de couple déterminée et couplé à une boîte de vitesses (BV) dont les rapports sont pilotés, en fonction d'une consigne de rapport à engager, par un calculateur (C2) fournissant une première information représentative du rapport effectivement engagé et une seconde information représentative d'un rapport cible utiles à la détermination de ladite consigne de couple, **caractérisé en ce qu'**il comprend en outre un calculateur (C1) selon la revendication 8 et propre à déterminer ladite consigne de couple.

10. Véhicule selon la revendication 9, **caractérisé en ce qu'**il est de type automobile.

## Patentansprüche

1. Verfahren zur Steuerung des Drehmoments, das von einem Antriebsstrang eines Fahrzeugs (V) erzeugt wird, wobei das Drehmoment von einem Drehmomentsollwert abhängt, der von einem ersten Rechner (C1) bestimmt wird, der das Funktionieren des Antriebsstrangs überwacht, und wobei der Antriebsstrang mit einem Schaltgetriebe (BV) gekoppelt ist, dessen Gänge gesteuert werden, in Abhängigkeit von einem Sollwert eines Gangs, der einzulegen ist, der von dem ersten Rechner (C1) geliefert wird, durch einen zweiten Rechner (C2), der diesem Letzteren (C1) eine erste Information liefert, die für den tatsächlich eingelegten Gang repräsentativ ist, und eine zweite Information, die für einen Zielgang repräsentativ ist, die für das Bestimmen des Drehmomentsollwerts nützlich sind, **dadurch gekennzeichnet, dass** es einen Schritt umfasst, bei dem bei Abwesenheit der ersten und der zweiten Information der erste Rechner (C1) den Drehmomentsollwert in Abhängigkeit von zwei Sollwerten von Gängen, die einzulegen sind, die zuvor in einem ersten und einem zweiten vorhergehenden Augenblick geliefert wurden, die als Ersatz jeweils der ersten und der zweiten Information ausgewählt werden, bestimmt.

2. Verfahren nach Anspruch 1, **dadurch gekennzeichnet, dass** der ausgewählte erste vorhergehende Augenblick von einer Dauer abhängt, die für den zweiten Rechner (C2) erforderlich ist, um einen neuen Sollwert des Gangs, der einzulegen ist, der von dem ersten Rechner (C1) geliefert wird, zu berücksichtigen, und einen aktuellen Zielgangwert durch diesen neuen Sollwert eines Gangs, der einzulegen ist, zu ersetzen, und dass der ausgewählte zweite vorhergehende Augenblick von einer Dauer abhängt, die für den zweiten Rechner (C2) erforderlich ist, um Aktuatoren des Schaltgetriebes (BV) zu steuern, um den Gang, der von dem neuen Sollwert eines Gangs, der einzulegen ist, bestimmt wird, mechanisch einzurücken, dann der zweiten Information einen neuen Wert zu geben.

3. Verfahren nach einem der Ansprüche 1 und 2, **dadurch gekennzeichnet, dass** der ausgewählte erste vorhergehende Augenblick zwischen etwa -150 ms in Bezug auf einen aktuellen Augenblick t und etwa -30 ms in Bezug auf einen aktuellen Augenblick t ausgewählt wird.

4. Verfahren nach einem der Ansprüche 1 bis 3, **dadurch gekennzeichnet, dass** der ausgewählte zweite vorhergehende Augenblick zwischen etwa -1200 ms in Bezug auf einen aktuellen Augenblick t und etwa -400 ms in Bezug auf einen aktuellen Augenblick t liegt.

5. Verfahren nach einem der Ansprüche 1 bis 4, **dadurch gekennzeichnet, dass** ein Fahrer des Fahrzeugs (V) bei dem Schritt über einen Fehler informiert wird.

6. Verfahren nach Anspruch 5, **dadurch gekennzeichnet, dass** der Fahrer mittels einer Textmeldung oder eines Bilds, die/das auf einem Bildschirm des Fahrzeugs (V) angegeben wird, und/oder einer akustischen Mitteilung, die von mindestens einem Lautsprecher des Fahrzeugs (V) ausgegeben wird, informiert wird.

7. Steuervorrichtung (DC) für einen ersten Rechner (C1), der das Funktionieren eines Fahrzeugantriebsstrangs (V) überwacht, die geeignet ist, ein Drehmoment in Abhängigkeit von einem bestimmten Drehmomentsollwert zu erzeugen, und die mit einem Schaltgetriebe (BV) gekoppelt ist, dessen Gänge gesteuert werden, in Abhängigkeit von einem Sollwert eines Gangs, der einzulegen ist, der von dem ersten Rechner (C1) gesteuert wird durch einen zweiten Rechner (C2), der diesem Letzteren (C1) eine erste Information geliefert, die für den Gang, der effektiv eingelegt ist, repräsentativ ist, und eine zweite Information, die für einen Zielgang repräsentativ ist, die für das Bestimmen des Drehmomentsollwerts nützlich sind, **dadurch gekennzeichnet, dass** sie eingerichtet ist, um bei Abwesenheit der ersten und der zweiten Information den Drehmomentsollwert in Abhängigkeit von zwei Sollwerten eines Gangs der einzulegen ist, die zuvor in einem ersten und zweiten ausgewählten vorhergehenden Augenblick geliefert wurden, jeweils als Ersatz der ersten und der zweiten Information zu bestimmen.

8. Rechner (C1) zum Überwachen des Funktionierens eines Antriebsstrangs eines Fahrzeugs (V), der geeignet ist, um ein Drehmoment in Abhängigkeit von einem bestimmten Drehmomentsollwert zu erzeugen, und mit einem Schaltgetriebe (BV) gekoppelt ist, dessen Gänge gesteuert sind, in Abhängigkeit von einem Sollwert eines Gangs, der einzulegen ist, durch einen zweiten Rechner (C2), der eine erste Information liefert, die für den effektiv eingelegten Gang repräsentativ ist, und eine zweite Information, die für einen Zielgang repräsentativ ist, die für das Bestimmen des Drehmomentsollwerts nützlich sind, **dadurch gekennzeichnet, dass** es eine Steuervorrichtung (DC) nach Anspruch 7 umfasst.

9. Fahrzeug (V), das einen Antriebsstrang umfasst, der geeignet ist, um in Abhängigkeit von einem bestimmten Drehmomentsollwert ein Drehmoment zu erzeugen, und der mit einem Schaltgetriebe (BV) gekoppelt ist, dessen Gänge gesteuert sind, in Abhängigkeit von einem Sollwert eines Gangs, der einzulegen ist, durch einen Rechner (C2), der eine erste Information liefert, die für den tatsächlich eingelegten Gang repräsentativ ist, und eine zweite Information eines Zielgangs, liefert, die für das Bestimmen des Drehmomentsollwerts nützlich sind, **dadurch gekennzeichnet, dass** es außerdem einen Rechner (C1) nach Anspruch 8 umfasst, der geeignet ist, den Drehmomentsollwert zu bestimmen.

10. Fahrzeug nach Anspruch 9, **dadurch gekennzeichnet, dass** es vom Typ Kraftfahrzeug ist.

## Claims

1. A method for controlling the torque produced by a powertrain of a vehicle (V), said torque being a function of a torque setpoint determined by a first computer (C1) monitoring the operation of said powertrain, and said powertrain being coupled to a gearbox (BV), the ratios of which are controlled, as a function of a ratio setpoint to be engaged, provided by said first computer (C1), by a second computer (C2) providing to the latter (C1) a first item of information representative of the ratio effectively engaged and a second item of information representative of a target ratio, that can be used for the determining of said torque setpoint, **characterized in that** it includes a step in which, in the absence of said first and second items of information, said first computer (C1) determines said torque setpoint as a function of two ratio setpoints to be engaged previously provided at first and second earlier times selected as a replacement respectively of said first and second items of information.

2. The method according to Claim 1, **characterized in that** said selected first previous time is a function of a duration necessary for said second computer (C2) for taking into account a new ratio setpoint value to be engaged, provided by said first computer (C1) and to replace a current target ratio value by this new ratio setpoint value to be engaged, and **in that** said selected second previous time is a function of a duration necessary for the second computer (C2) for driving actuators of said gearbox (BV) for shifting mechanically the ratio defined by said new ratio setpoint to be engaged, then giving a new value to said second item of information.

3. The method according to one of Claims 1 and 2, **characterized in that** said first selected earlier time is comprised between approximately -150 ms in relation to a current time t, and approximately -30 ms in relation to a current time t.

4. The method according to one of Claims 1 to 3, **characterized in that** said selected second earlier time is comprised between approximately -1200 ms in relation to a current time t and approximately -400 ms in relation to a current time t.

5. The method according to one of Claims 1 to 4, **characterized in that** in said step, a driver of said vehicle (V) is informed of a fault.

6. The method according to Claim 5, **characterized in that** said driver is informed by means of a textual message or a thumbnail image displayed on a screen of said vehicle (V) and/or a sound message broadcast by at least one speaker of said vehicle (V).

7. A control device (DC) for a first computer (C1) monitoring the operation of a powertrain of a vehicle (V) able to produce a torque as a function of a determined torque setpoint, and coupled to a gearbox (BV), the ratios of which are controlled, as a function of a ratio setpoint to be engaged provided by said first computer (C1), by a second computer (C2) providing to the latter (C1) a first item of information representative of the ratio effectively engaged, and a second item of information representative of a target ratio, that can be used for the determining of said torque setpoint, **characterized in that** it is arranged, in the absence of said first and second items of information, for determining said torque setpoint as a function of two ratio setpoints to be engaged, previously provided at first and second earlier times selected as a replacement respectively for said first and second items of information.

8. A computer (C1) for monitoring the operation of a powertrain of a vehicle (V) suitable to produce a torque as a function of a determined torque setpoint and coupled to a gearbox (BV), the ratios of which are controlled, as a function of a ratio setpoint to be engaged, by a second computer (C2) providing a first item of information representative of the ratio effectively engaged, and a second item of information representative of a target ratio, which can be used for the determining of said torque setpoint, **characterized in that** it includes a control device (DC) according to Claim 7.

9. A vehicle (V) including a powertrain able to produce a torque as a function of a determined torque setpoint and coupled to a gearbox (BV), the ratios of which are controlled, as a function of a ratio setpoint to be engaged, by a computer (C2) providing a first item of information representative of the ratio effectively engaged, and a second item of information representative of a target ratio, which can be used in the determining of said torque setpoint, **characterized in that** it further includes a computer (C1) according to Claim 8 and suitable to determine said torque setpoint.

10. The vehicle according to Claim 9, **characterized in that** it is of the automobile type.
